# FASCICULE DE BREVET EUROPEEN

(11) **EP 4 514 653 B1**
(45) Date de publication et mention de la délivrance du brevet: **13.05.2026**
(21) Numéro de dépôt: 23722384.7
(22) Date de dépôt: 28.04.2023
(51) Int. Cl.: B60Q 1/00, F21S 43/237, F21S 43/245

(54) **ENSEMBLE LUMINEUX DEMONTABLE**
DEMONTIERBARE LICHTEINHEIT
DISMOUNTABLE LIGHT ASSEMBLY

(30) Priorité: 29.04.2022 FR 2204100; 09.12.2022 FR 2213076
(43) Date de publication de la demande: 05.03.2025
(73) Titulaire: Valeo Vision, 93012 Bobigny Cedex (FR)
(72) Inventeur: PAUGAM, Stephane, 49000 ANGERS (FR); RUAT, Olivier, 49000 ANGERS (FR); WARNER, Gavin, 93012 BOBIGNY CEDEX (FR); PATRIZI, Stephane, 49000 ANGERS (FR); SYRE, Matthieu, 49000 ANGERS (FR)
(74) Mandataire: Valeo Visibility
(86) Numéro de dépôt international: PCT/EP2023/061277
(87) Numéro de publication internationale: WO 2023/209168

(56) Documents cités:
- DE-A1- 102018 005 317
- DE-A1- 102019 218 671
- GB-A- 2 451 125
- US-A1- 2003 012 033
- US-A1- 2019 039 505

## Description

### DOMAINE TECHNIQUE DE L'INVENTION

Le domaine technique de l'invention est celui des ensembles lumineux pour véhicules automobiles (véhicules particulier ou véhicules utilitaires). L'ensemble lumineux peut en particulier être apte à émettre une fonction d'éclairage et/ou de signalisation.

La présente invention concerne en particulier des ensembles lumineux démontables, en particulier ceux situés à l'avant ou à l'arrière du véhicule.

### ARRIERE-PLAN TECHNOLOGIQUE DE L'INVENTION

Actuellement les véhicules automobiles sont équipés d'ensembles lumineux à l'avant et à l'arrière, afin soit d'éclairer la route, soit d'être visibles par les autres automobilistes. Ces ensembles sont constitués d'une ou plusieurs sources lumineuses disposées dans un boitier fermé de façon hermétique, car compte tenu des conditions d'utilisation, il est nécessaire que l'ensemble soit étanche pour éviter que de l'eau n'atteigne les sources lumineuses. De ce fait lors d'un accident entrainant la détérioration d'une partie de l'ensemble ou d'une défaillance, comme une des sources de lumière ou un composant électronique par exemple, il faut changer tout l'ensemble ce qui augmente le prix de la réparation pour l'utilisateur.

Le document DE 10 2019 218 671 A1 décrit un ensemble lumineux suivant l'art antérieur.

### RESUME DE L'INVENTION

L'invention offre une solution aux problèmes évoqués précédemment, en permettant de ne changer que la partie de l'ensemble qui est endommagée et non l'ensemble complet.

L'invention est décrite à la revendication 1. Plus particulièrement, l'invention concerne un ensemble lumineux destiné à être monté sur une véhicule automobile et comprenant :
- un boitier principal comprenant un premier côté avec une ouverture avant et un deuxième côté, opposé au première côté, avec une ouverture arrière disposée en regard d'au moins une partie de l'ouverture avant,
- un dispositif lumineux avec un boitier secondaire,
- une glace fermant l'ouverture avant du premier coté du boitier principal de façon étanche,
il est caractérisé en ce que le dispositif lumineux est disposé en regard l'ouverture arrière du deuxième côté du boitier principal, et le boitier secondaire est fixé de façon étanche et réversible au deuxième côté du boitier principal. L'ouverture avant s'étend de préférence sur toute la surface avant du boitier principal.

En cas de défaillance d'un composant d'un dispositif lumineux d'un ensemble lumineux et/ou en cas de chocs entraînant la détérioration d'une partie de l'ensemble lumineux, l'ensemble lumineux selon l'invention permet de ne remplacer qu'une partie de l'ensemble lumineux : par exemple, on peut ne remplacer que la glace et le boitier principal ou que le dispositif lumineux, tout en garantissant l'étanchéité de l'ensemble avant et après la réparation. Cela permet de réduire les coûts de réparation.

L'ouverture du deuxième côté, opposé au premier côté, permet de rapporter le dispositif lumineux au boitier principal, en particulier grâce à la fixation du boitier secondaire au boitier principal. Ceci est particulièrement avantageux si le boitier principal est fermé du premier coté de façon irréversible par la glace.

L'invention permet également une certaine standardisation car le même boitier principal avec sa glace d'un ensemble lumineux donné peut être utilisé avec différents dispositifs lumineux selon le niveau d'équipement du véhicule.

Avantageusement, le dispositif lumineux est logé dans l'ouverture arrière du deuxième côté du boitier principal.

Avantageusement, la glace est fixée de façon irréversible au boitier principal. La glace peut, par exemple, être collée au boitier principal.

Avantageusement, le boitier secondaire comprend une gorge dans laquelle est positionné un joint d'étanchéité en vis-à-vis du boitier principal. Ce joint garantit l'étanchéité entre les deux boitiers, en particulier entre le boitier secondaire du dispositif lumineux et le boitier principal de l'ensemble lumineux.

Avantageusement, le dispositif lumineux comprend un moyen d'attache du boitier secondaire sur le boitier principal. Ce moyen d'attache sera par exemple constitué d'oreilles placées sur le boitier secondaire dans lesquelles on pourra utiliser des vis de fixation venant s'insérer dans des moyens d'attaches complémentaires, comme des fûts de vissage, placés sur le boitier principal. Lorsque les vis de fixation sont serrées, elles permettent de venir comprimer le joint d'étanchéité sur le boitier principal, et ainsi garantir la fixation étanche du boitier secondaire, et donc du dispositif lumineux sur le boitier principal.

Avantageusement, le boitier secondaire est ouvert sur une face avant et la glace ferme la face avant du boitier secondaire. En effet, comme le boitier secondaire est fixé de façon étanche au boitier principal et la glace ferme l'ouverture avant du boitier principal de façon étanche, la glace participe à la fermeture étanche de la face avant du boitier secondaire. En particulier, la face avant du boitier secondaire est dépourvue de fixation à la glace, c'est-à-dire que la face avant du boitier secondaire et la glace ne sont pas en contact. La glace participe alors de façon indirecte à la fermeture de la face avant du boitier secondaire.

Avantageusement, le dispositif lumineux comprend une source de lumière et un élément de déviation optique, comme par exemple un réflecteur, une lentille ou un guide de lumière. L'élément de déviation optique permet de mettre en forme les rayons lumineux émis par la source de lumière pour participer à la formation d'un faisceau d'éclairage ou de signalisation.

Selon l'invention, le dispositif lumineux est un projecteur ou un feu arrière. En particulier, le projecteur, respectivement le feu arrière, peut comprendre un ou plusieurs modules lumineux, respectivement une ou plusieurs unités lumineuses. Le ou les modules lumineux, respectivement le ou les unités lumineuses, sont disposé(e)s dans le boitier secondaire. Selon un exemple, le boitier secondaire comprend une cavité dans laquelle sont reçus le ou les modules lumineux, respectivement le ou les unités lumineuses. La cavité peut notamment comporter une ouverture, et le projecteur, respectivement le feu arrière, peut être dépourvu de glace de fermeture venant fermer l'ouverture de cette cavité.

Par exemple, chaque module lumineux, respectivement chaque unité lumineuse, comporte au moins une source de lumière et un élément de déviation optique permettant de mettre en forme les rayons lumineux émis par la source de lumière.

Selon l'invention, le boitier principal a une forme allongée présentant deux extrémités et comprend deux projecteurs ou deux feux arrière, chacun ayant un boitier secondaire fixé de façon étanche et réversible à chaque extrémité du boitier principal. Ainsi, l'ensemble lumineux est destiné à couvrir toute la largeur avant ou arrière du véhicule. Le boitier principal et la glace constituent alors un bandeau auquel sont attachés les projecteurs ou les feux arrière. Dans ce cas, l'ensemble lumineux comprend à la fois ce bandeau très volumineux, très étendu avec la glace qui présente de grandes dimensions et qui est donc chère, ainsi que plusieurs autres éléments très chers, comme les projecteurs ou les feux arrière. Grâce à l'invention, il n'est pas nécessaire de changer la totalité de l'ensemble lumineux, formé par le bandeau et les projecteurs ou les feux arrière, en cas de défaillance d'un projecteur ou d'un feu arrière, ou en cas de choc sur la glace. En effet, il est possible de ne changer que le projecteur ou le feu arrière défectueux et de garder le bandeau, c'est-à-dire, la glace et le boitier principal ainsi que l'autre projecteur ou feu arrière, ou alors, il est également possible de ne changer que la glace et le boitier principal, et de conserver les projecteurs ou les feux arrière.

Selon l'invention, la glace couvre les deux projecteurs ou les deux feux arrière. En particulier, le boitier secondaire de chacun des deux projecteurs ou des deux feux arrière est ouvert sur une face avant, et la glace couvre la face avant des boitiers secondaires des deux projecteurs ou des deux feux arrière. Cette ouverture sur la face avant peut correspondre à l'ouverture de la cavité du boitier secondaire. Le bandeau comprend ici une seule et grande glace couvrant à la fois les deux projecteurs ou les deux feux arrière et la partie située entre eux, au lieu de deux glaces de plus faibles dimensions ne couvrant chacune qu'un seul projecteur ou qu'un seul feu arrière. L'ensemble lumineux selon l'invention est ici particulièrement avantageux car on peut conserver les projecteurs ou les feux arrière en cas de chocs sur la glace par exemple.

Selon l'invention, l'ensemble lumineux comporte au moins un guide lumineux placé dans le boitier principal derrière la glace. Ces guides lumineux permettent de former un motif lumineux. Ces guides lumineux permettent notamment de former une signature lumineuse spécifique au véhicule automobile sur lequel l'ensemble lumineux est destiné à être monté.

Selon l'invention, le ou chaque guide lumineux est alimenté par une source de lumière disposée dans le projecteur ou dans le feu arrière. Cela évite d'avoir de l'électronique dans le bandeau. Autrement dit, dans l'ensemble lumineux, seuls les projecteurs, ou les feux arrière comportent des composants électroniques. Ainsi, il est facile de pouvoir remplacer indépendamment le bandeau, ou l'un ou l'autre des projecteurs ou des feux arrière.

Selon l'invention, cette source de lumière spécifique est disposée dans le boitier secondaire du projecteur ou de feu arrière, sur une carte de circuits imprimés qui lui est dédiée. Par carte de circuits imprimés dédiée, on entend que cette carte de circuits imprimés diffère d'une carte de circuits imprimés sur laquelle est disposée la source de lumière du projecteur ou du feu arrière et qui réalise le faisceau d'éclairage ou de signalisation.

Selon un deuxième mode de réalisation non couvert par l'invention, l'ensemble lumineux est un projecteur et le dispositif lumineux comprend au moins un module lumineux.

L'invention et ses différentes applications seront mieux comprises à la lecture de la description qui suit et à l'examen des figures qui l'accompagnent.

### BREVE DESCRIPTION DES FIGURES

Les figures sont présentées à titre d'exemple indicatif et nullement limitatif de l'invention.
[Fig. 1] est une vue éclatée d'un premier mode de réalisation de l'invention,
[Fig. 2] est une vue en coupe au milieu de l'ensemble de la figure 1,
[Fig. 3] est un détail d'une vue en coupe de l'ensemble de la figure 1,
[Fig. 4] est une vue éclatée d'un deuxième mode de réalisation non couvert par l'invention à la hauteur d'un des projecteurs,
[Fig. 5] est une vue éclatée d'une variante du deuxième mode de réalisation non couverte par l'invention.

### DESCRIPTION DETAILLEE

Sauf précision contraire, un même élément apparaissant sur des figures différentes présente une référence unique.

Dans toute la description on appellera « avant », le côté par où sort la lumière et « arrière », le côté par lequel est émis la lumière.

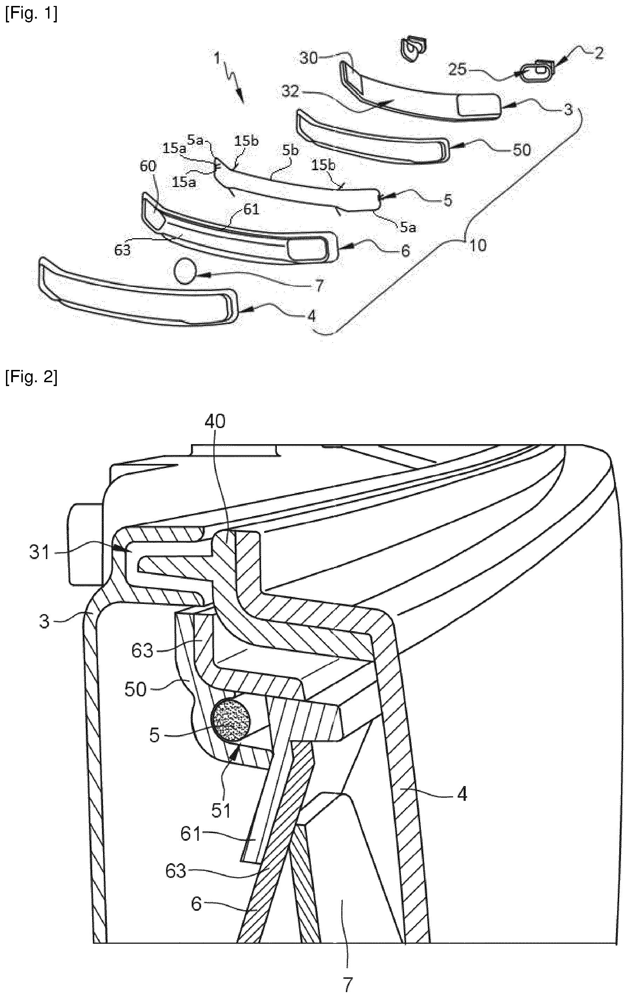

Dans le premier mode de réalisation illustré figure 1, l'ensemble lumineux 1 comprend deux dispositifs lumineux formés par deux projecteurs 2, un boitier principal 3 et une glace 4. La description est ici faite pour des dispositifs lumineux formés par des projecteurs avant mais cela s'appliquerait de la même façon pour des dispositifs lumineux formés par des feux arrière. Le boitier principal 3 comprend un premier côté avec une ouverture avant 32, et un deuxième côté, opposé au premier côté, avec deux ouvertures arrière 30. Dans une alternative non représentée et non couverte par l'invention, l'ensemble lumineux peut ne comporter qu'un seul projecteur, et le boitier principal peut ne comprendre qu'une seule ouverture arrière.

Sur l'exemple illustré, le boitier principal 3 a une forme allongée présentant deux extrémités. L'ouverture avant 32 s'étend d'une extrémité à l'autre du boitier principal 3, c'est-à-dire sur toute la surface du boitier principal 3. Les ouvertures arrières 30 sont chacune disposées en regard de l'ouverture avant 32, à l'une des extrémités du boitier principal 3.

La glace 4 est disposée en regard de l'ouverture avant 32 du boitier principal 3. Elle ferme l'ouverture avant du boitier principal 3 de façon étanche. Dans l'exemple illustré, la glace 4 est fixée sur le boitier principal 3 par collage. Tel que visible sur la figure 2 représentant une coupe faite au milieu de l'ensemble lumineux 1 assemblé, la glace 4 comprend une nervure 40, et le boitier principal 3 comprend une fente 31 recevant la nervure 40. Pour solidariser la glace 4 au boitier principal 3 par collage, de la colle est introduite dans la fente 31, et la nervure 40 de la glace 4 est ensuite introduite dans la fente 31. Alternativement, la glace 4 pourrait être assemblée au boitier principal 3 par soudage, ou par un procédé de plaque chauffante (désigné « hotplate » en anglais). On comprend ainsi que la glace 4 est fixée non seulement de façon étanche au boitier principal 3, mais également de manière irréversible, ou autrement dit de manière indémontable. La glace 4 et le boitier principal 3 forment ainsi un bandeau 10 non démontable. On entend par non démontable qu'il n'est pas possible de détacher la glace 4 du boitier principal 3 sans endommager la glace 4 et/ou le boitier principal 3.

Les projecteurs 2 sont chacun disposés à une extrémité du boitier principal 3, en regard d'une des ouvertures arrières 30 du boitier principal 3, et ils sont attachés au boitier principal 3. Les projecteurs 2 comportent chacun une ouverture avant 25 alignée avec l'ouverture arrière 30 du boitier principal 3.

Lorsque l'ensemble lumineux 1 est monté sur un véhicule, le bandeau 10 couvre tout l'avant du véhicule, et les deux projecteurs 2, disposés à chaque extrémité du boitier principal 3, constituent ainsi un projecteur droit et un projecteur gauche du véhicule.

Les projecteurs 2 comportent au moins une source de lumière et un élément de déviation optique, comme par exemple un réflecteur, une lentille ou un guide de lumière, permettant de mettre en forme les rayons lumineux émis par la source de lumière pour former au moins une partie d'un faisceau d'éclairage ou de signalisation. Par exemple, les projecteurs 2 peuvent comporter des modules lumineux comportant l'au moins une source de lumière et l'élément de déviation optique.

La glace 4 étant également disposée en regard des ouvertures arrières 30 du boitier principal 3, le faisceau d'éclairage ou de signalisation formé par chaque projecteur 2 peut ainsi passer à travers la glace 4, et être visible depuis l'extérieur de l'ensemble lumineux 1.

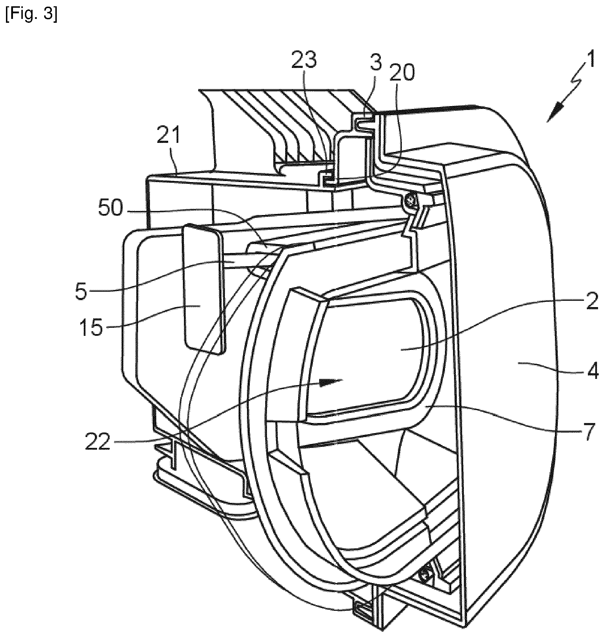

La figure 3 montre une coupe de l'ensemble lumineux 1 à la hauteur d'un des projecteurs 2. Chaque projecteur 2 comporte un boitier secondaire 21 attaché au boitier principal 3 de façon étanche et réversible.

Le boitier secondaire 21 comprend des éléments d'attache qui viennent coopérer avec des éléments d'attache complémentaires disposés sur le boitier principal 3. Par exemple, les éléments d'attache du boitier secondaire 21 peuvent être formés par des oreilles disposées à la périphérie du boitier secondaire 21 et comportant un trou traversant, et les éléments d'attache complémentaire disposés sur le boitier principal 3 peuvent être formés par des fûts de vissage. Ainsi, des vis de fixation peuvent être insérées dans les trous traversant et dans les fûts de vissage afin d'attacher ensemble le boitier secondaire 21 et le boitier principal 3 de manière réversible. Les projecteurs 2 sont ainsi démontables du boitier principal 3 et donc du bandeau 10.

L'ensemble lumineux 1 comprend un joint d'étanchéité 20 positionné dans une gorge 23 du boitier secondaire 21, et mis en appui sur le boitier principal 3 afin de garantir une fixation étanche entre le projecteur 2 et le bandeau 10. Lorsque le boitier secondaire 21 est assemblé au boitier principal 3, les vis de fixation sont serrées, ce qui met en contact le boitier principal 3 et le boitier secondaire 21, comprimant ainsi le joint d'étanchéité 20 entre le boitier principal 3 et le boitier secondaire 2. L'étanchéité entre le boitier principal 3 et le boitier secondaire 2 est ainsi garantie.

Dans cet exemple, les projecteurs 2 sont dépourvus de glace de fermeture qui leur est propre. Autrement dit, l'ouverture avant 25 de chaque projecteur n'est pas fermée par une glace propre au projecteur. C'est la glace 4 qui permet de fermer indirectement, et de façon étanche, l'ouverture avant 25 de chaque projecteur 2, et de protéger ainsi les projecteurs 2. En effet, la glace 4 ferme l'ouverture avant 32 du boitier principal 3 de façon étanche, et le boitier secondaire 21 de chaque projecteur 2 est fixé de façon étanche au boitier principal 3 au niveau des ouvertures arrières 30. Ainsi, la glace 4 assure la fermeture étanche des ouvertures avant 25 des projecteurs 2.

Dans une variante non représenté, l'ouverture avant 25 des projecteurs 2 peut être fermée de façon étanche par une glace propre au projecteur 2.

Dans l'exemple non limitatif illustré, l'ensemble lumineux 1 comprend également une pluralité de guides lumineux 5, un support 50 des guides lumineux 5 et un masque 6. Le support 50 des guides lumineux 5, les guides lumineux 5 et le masque 6 sont disposés entre le boitier principal 3 et la glace 4, et plus précisément entre le premier côté du boitier principal 3 et la glace 4. Le support 50 des guide lumineux 5, les guides lumineux 5 et le masque 6 sont pris en sandwich entre le boitier principal 3 et la glace 4. Le bandeau 10 comprend ainsi les guides lumineux 5, le support 50 des guides lumineux 5 et le masque 6.

Le support 50 des guides lumineux, les guides lumineux 5 et le masque 6 sont optionnels. Le bandeau 10 peut ne comprendre que le boitier principal 3 et la glace 4. Il est également possible que le bandeau 10 ne comprenne que le boitier principal 3, la glace 4 et l'un ou l'autre du masque 6 ou de l'ensemble formé par le support 50 des guides lumineux 5 et les guides lumineux 5.

Les guides lumineux 5 permettent de former une signature lumineuse propre au véhicule sur lequel l'ensemble lumineux 1 est monté. Dans l'exemple illustré, l'ensemble lumineux comprend six guides lumineux 5 répartis le long de la périphérie de la face avant du boitier principal 3. Deux guides lumineux latéraux 5a courbes sont situés à chaque extrémité du boitier principal 3, et deux guides lumineux centraux 5b joignant deux à deux les guides lumineux latéraux 5a. Cette répartition des guides lumineux 5 permet d'optimiser le guidage de la lumière dans les parties courbées. Toutefois, le nombre de guide lumineux n'est pas limitatif, et un unique guide lumineux, ou deux guides lumineux pourraient par exemple être utilisés.

Tel que visible sur la figure 2, les guides lumineux 5 sont placés dans une rainure 51 du support 50 des guides lumineux 5, afin d'être maintenus en position.

Chaque guide lumineux 5 est alimenté par au moins une source de lumière disposée dans un des projecteurs 2. Les sources de lumière alimentant les guides lumineux 5 sont positionnées dans le boitier secondaire 21 des projecteurs 2, par exemple sur une carte de circuits imprimés 15 (visible en figure 3) dédiée. Ainsi, le bandeau 10 ne comporte pas de composants électroniques, ce qui permet de pouvoir remplacer plus facilement de façon indépendante le bandeau ou l'un ou l'autre des projecteurs 2. On notera que les sources de lumière qui alimentent les guides lumineux 5 sont distinctes des sources de lumière formant les faisceaux d'éclairage ou de signalisation des projecteurs 2.

Les guides lumineux centraux 5b sont chacun alimentés par une source de lumière disposée dans l'un des projecteurs 2 à leur première extrémité, et une source de lumière disposée dans l'autre des projecteurs 2 à leur deuxième extrémité. Sur la figure 1, on peut voir les deux entrées de lumière 15b des guides lumineux centraux 5b. Cette double alimentation des guides lumineux centraux 5b permet d'éclairer les guides lumineux centraux 5b de façon homogène. Les guides lumineux latéraux 5a sont alimentés par une unique source de lumière disposée dans le projecteur 2 située à la même extrémité du boitier principal 3 que le guide lumineux latéral 5a correspondant. Sur la figure 1, on peut voir l'entrée de lumière 15a des guides lumineux latéraux 5a.

Pour permettre l'alimentation des guides lumineux par les sources de lumière disposés dans les projecteurs 2, chaque guide lumineux comprend ainsi une extrémité située dans le projecteur qui comprend la source de lumière qui alimente le guide, une portion située dans le bandeau 10 et une zone de jonction située entre l'extrémité et la portion située dans le bandeau 10. La zone de jonction passe ainsi dans l'ouverture avant 25 du projecteur 2 et dans l'ouverture arrière 30 du boitier principal 3.

Le masque 6 est disposé à l'avant du support 50 des guides lumineux 5 et des guides lumineux 5. Le masque 6 comprend deux orifices 60 placés à ses extrémités, et disposés en regard des ouvertures arrières 30 du boitier principal 3. Les orifices 60 sont donc également situés en regard des projecteurs 2, et notamment en regard des ouvertures avant 25 des projecteurs 2. Les faisceau d'éclairage ou de signalisation émis par les projecteurs 2 peuvent ainsi être transmis au travers des ouvertures arrières 30, de l'ouverture avant 32 et des orifices 60 jusqu'à la glace 4, afin qu'ils soient visibles depuis l'extérieur de l'ensemble lumineux 1.

La masque 6 comprend une partie opaque 63 permettant de masquer certaines parties de l'ensemble lumineux 1, et notamment la partie centrale de l'ensemble lumineux 1, ainsi qu'une partie transparente 61 disposée en regard des guides lumineux 5, en avant des guides lumineux 5. Les guides lumineux 5, et la lumière émise par les guides lumineux 5 peuvent ainsi être visibles depuis l'extérieur de l'ensemble lumineux 1.

De plus, sur la face avant du masque 6, correspondant à la face tournée vers la glace 4, il est possible de tracer des motifs afin de procurer un style au véhicule. Par exemple, les motifs peuvent être des formes géométriques.

Le support 50 de guide lumineux 5 et le masque 6 sont assemblés ensemble par exemple par clippage ou par vissage, et les guides lumineux 5 sont positionnés et maintenus en étant pris en sandwich entre le support 50 et le masque 6. Alternativement, le support 50 et le masque 6 pourraient être assemblés par collage. L'assemblage par clippage ou par vissage permet de limiter le temps d'assemblage par rapport à un assemblage par collage qui nécessite un temps de séchage.

Une fois assemblés, le support 50, les guides lumineux 5 et le masque 6 sont positionnés entre le boitier principal 3 et la glace 4, en étant pris en sandwich entre le boitier principal 3 et la glace 4. Ainsi, le bandeau 10 comprenant le boitier principal 3, le support 50, les guides lumineux 5, le masque 6 et la glace 4 est assemblé de manière indémontable.

Tel que visible sur la figure 1, et optionnellement, le bandeau peut également comprendre un logo 7 disposé entre le masque 6 et la glace 4. De manière alternative mais non illustré, le logo 7 peut être disposé entre le masque 6 et le boîtier principal 3. Afin de rendre visible le logo 7 depuis la glace 4, une ouverture est opérée dans le masque 6.

L'ensemble lumineux 1 est avantageux en ce qu'en cas de choc sur la glace 4 ou en cas de disfonctionnement de l'un des projecteurs 2, il est possible de ne changer que le bandeau 10 et conserver les projecteurs 2, ou de ne changer que l'un des projecteurs 2 et conserver le bandeau 10 et l'autre projecteur 2.

Pour changer le bandeau 10, il suffit de déposer l'ensemble lumineux 1, puis de dévisser les deux projecteurs 2 du bandeau 10, et de revisser les deux projecteur 2 sur un nouveau bandeau. Pour changer l'un des projecteurs, il suffit de déposer l'ensemble lumineux 1, puis de dévisser le projecteur 2 à changer et de remplacer ce projecteurs 2 défectueux par un autre projecteur.

Dans ce mode de réalisation, le bandeau 10 peut être plus ou moins complexe selon les options (avec ou sans guide lumineux, avec ou sans logo, ...), et grâce à l'assemblage démontable des projecteurs 2 sur le bandeau 10, il est possible de monter différents projecteurs 2, plus ou moins sophistiqués, sur le bandeau 10, en fonction des performances souhaitées pour l'ensemble lumineux 1.

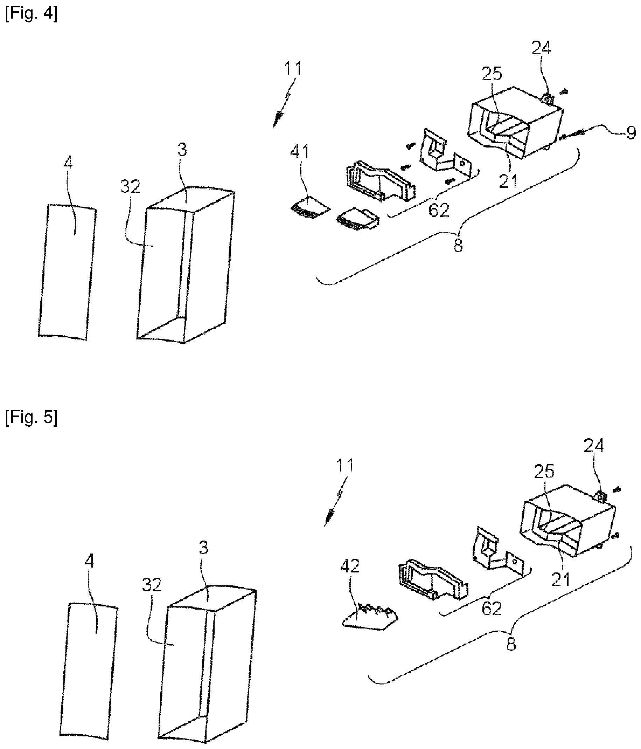

La figure 4 montre un deuxième mode de réalisation non couvert par l'invention où l'ensemble lumineux 1 est un projecteur 11 et comprend un boitier principal 3, une glace 4 et un dispositif lumineux 8. Le dispositif lumineux 8 comprend des modules lumineux 41, un support 62 des modules lumineux 41, et un boitier secondaire 21 dans lequel sont disposés les modules lumineux 41 et le support 62 des modules lumineux 41.

Les éléments semblables au premier mode de réalisation seront rapidement décrits, étant entendu que la description faite de ces éléments dans le premier mode de réalisation s'applique.

Comme dans le premier mode de réalisation, le boitier principal 3 comprend un premier côté avec une ouverture avant 32 et un deuxième côté, opposé au premier côté avec une ouverture arrière (non visible) disposée en regard de l'ouverture avant 32, et la glace 4 ferme l'ouverture avant du premier côté du boitier principal 3 de façon étanche. De plus, la glace 4 est fixée de façon irréversible au boitier principal 3. La fixation de la glace 4 sur le boitier principal 3 est semblable à celle décrite pour le premier mode de réalisation.

L'ouverture arrière est destinée à recevoir le boitier secondaire 21 du dispositif lumineux 8. Comme dans le premier mode de réalisation, le boitier secondaire 21 du dispositif lumineux 8 comprend des oreilles 24 comportant des trous traversant, et réparties à la périphérie du boitier secondaire 21, coopérant avec des fûts de vissage du boitier principal 3 et permettant l'insertion de vis de fixation 9 pour attacher le boitier secondaire 21 de façon réversible sur le boitier principal 3. De plus, le boitier secondaire 21 du dispositif lumineux 8 est également monté de façon étanche sur le boitier principal 3. Comme décrit pour le premier mode de réalisation, un joint d'étanchéité peut être utilisé pour garantir l'étanchéité.

Le dispositif lumineux 8 comprend une ouverture avant 25 alignée avec l'ouverture arrière du boitier principal 3. Dans l'exemple illustré, le dispositif lumineux 8 est dépourvu de glace de fermeture qui lui est propre. Autrement dit, l'ouverture avant 25 du dispositif lumineux 8 n'est pas fermée par une glace propre au dispositif lumineux 8. La glace 4 du projecteur 11 permet de fermer indirectement, et de façon étanche l'ouverture avant 25 du dispositif lumineux 8.

Les modules lumineux 41 comportent au moins une source de lumière et un élément de déviation optique, comme par exemple un réflecteur, une lentille ou un guide de lumière, permettant de mettre en forme les rayons lumineux émis par la source de lumière pour former au moins une partie d'un faisceau d'éclairage ou de signalisation. Les faisceaux émis par les modules lumineux 41 passent au travers de la glace 4, et sont ainsi visibles depuis l'extérieur du projecteur 11.

Avec ce projecteur 11 selon l'invention, en cas de choc sur la glace 4, il est possible de ne changer que l'ensemble formé par la glace 4 et le boitier principal 3 et de conserver le dispositif lumineux 8. Et, en cas de disfonctionnement d'un module lumineux 41, il est possible de ne changer que le dispositif lumineux 8 et de conserver l'ensemble formé par la glace 4 et le boitier principal 3.

Par ailleurs, l'assemblage démontable du dispositif lumineux 8 sur le boitier principal du projecteur 11 permet de pouvoir changer le dispositif lumineux 8 monté sur le projecteur 11, et en particulier, le nombre ou le type de modules lumineux disposés dans le dispositif lumineux 8.

Ainsi, comme le montre la figure 5 représentant une variante de réalisation du deuxième mode de réalisation, le dispositif lumineux 8 peut ne comprendre qu'un unique module lumineux 42 à la place des deux modules lumineux 41. Par ailleurs, le module lumineux 42 est différent du module lumineux 41. Ainsi, il est possible d'adapter facilement le projecteur 11 en fonction des fonctions d'éclairage ou de signalisation que doit réaliser le projecteur 11, en choisissant le dispositif lumineux 8 qui est positionné dans le projecteur 11. Le projecteur 11 permet donc une bonne interchangeabilité entre différents dispositifs lumineux 8.

## Revendications

1. Ensemble lumineux (1) destiné à être monté sur un véhicule automobile, et destiné à venir couvrir toute la largeur avant ou arrière du véhicule, et comprenant :
- un boitier principal (3) ayant une forme allongée présentant deux extrémités et comprenant un premier côté avec une ouverture avant (32) et un deuxième côté, opposé au première côté, avec deux ouvertures arrières (30) disposées en regard d'au moins une partie de l'ouverture avant (32),
- deux projecteurs ou deux feux arrière, chacun ayant un boitier secondaire (21),
- une glace (4) fermant l'ouverture avant du premier côté du boitier principal (3) de façon étanche et couvrant les deux projecteurs ou feux arrière,
les deux projecteurs ou les deux feux arrière étant chacun disposés en regard d'une des deux ouvertures arrière du deuxième côté du boitier principal, et le boitier secondaire (21) de chacun des projecteurs ou feux arrière étant fixé de façon étanche et réversible à chaque extrémité du boitier principal (3), l'ensemble lumineux (1) étant **caractérisé en ce qu'**il comporte au moins un guide lumineux (5) placé dans le boitier principal (3) derrière la glace (4), le guide lumineux (5) étant alimenté par une source de lumière disposée dans au moins un des projecteurs (2) ou des feux arrière, et positionnée dans le boitier secondaire (21) dudit au moins un projecteur (2) ou dudit au moins un feu arrière, sur une carte de circuits imprimés (15) dédiée.

2. Ensemble lumineux (1) selon la revendication 1, **caractérisé en ce que** la glace (4) est fixée de façon irréversible au boitier principal (3).

3. Ensemble lumineux (1) selon l'une des revendications précédentes, **caractérisé en ce que** chaque boitier secondaire (21) comprend une gorge (23)
dans laquelle est positionné un joint d'étanchéité (20) en vis-à-vis du boitier principal.

4. Ensemble lumineux (1) selon l'une des revendications précédentes, **caractérisé en ce que** les deux projecteurs ou les deux feux arrière comprennent un moyen d'attache (24) de leur boitier secondaire (21) sur le boitier principal (3).

5. Ensemble lumineux (1) selon l'une des revendications précédentes, **caractérisé en ce que** chaque boitier secondaire (21) est ouvert sur une face
avant et que la glace (4) ferme la face avant du boitier secondaire.

6. Ensemble lumineux (1) selon l'une des revendications précédentes, **caractérisé en ce que** les deux projecteurs ou les deux feux arrière comprennent une source de lumière et un élément de déviation optique.

## Patentansprüche

1. Leuchtenbaugruppe (1), die zur Montage an einem Kraftfahrzeug bestimmt ist und die gesamte vordere oder hintere Breite des Fahrzeugs abdecken soll, mit:
- ein Hauptgehäuse (3) mit länglicher Form und zwei Enden, das eine erste Seite mit einer vorderen Öffnung (32) und eine der ersten Seite gegenüberliegende zweite Seite mit zwei hinteren Öffnungen (30) umfasst, die so angeordnet sind, dass sie zumindest einem Teil der vorderen Öffnung (32) zugewandt sind,
- zwei Scheinwerfer oder zwei Rückleuchten, die jeweils ein Sekundärgehäuse (21) aufweisen,
- eine Außenlinse (4), die die vordere Öffnung der ersten Seite des Hauptgehäuses (3) wasserdicht verschließt und die beiden Scheinwerfer oder Rückleuchten abdeckt,
- wobei die beiden Scheinwerfer oder die beiden Rückleuchten jeweils einer der beiden hinteren Öffnungen der zweiten Seite des Hauptgehäuses zugewandt angeordnet sind und das Sekundärgehäuse (21) jedes der Scheinwerfer oder Rückleuchten wasserdicht und reversibel an jedem Ende des Hauptgehäuses (3) befestigt ist,
- wobei die Leuchtenbaugruppe (1) **dadurch gekennzeichnet ist, dass** sie mindestens einen Lichtleiter (5) umfasst, der im Hauptgehäuse (3) hinter der Außenlinse (4) angeordnet ist, wobei der Lichtleiter (5) von einer Lichtquelle gespeist wird, die in mindestens einem der Scheinwerfer (2) oder Rückleuchten angeordnet ist, und im Sekundärgehäuse (21) des mindestens einen Scheinwerfers (2) oder der mindestens einen Rückleuchte auf einer dafür vorgesehenen Leiterplatte (15) positioniert ist.

2. Leuchtenbaugruppe (1) nach Anspruch 1, **dadurch gekennzeichnet, dass** die Außenlinse (4) irreversibel am Hauptgehäuse (3) befestigt ist.

3. Leuchtenbaugruppe (1) nach einem der vorstehenden Ansprüche, **dadurch gekennzeichnet, dass** jedes Sekundärgehäuse (21) eine Nut (23) aufweist, in der eine Dichtung (20) dem Hauptgehäuse zugewandt angeordnet ist.

4. Leuchtenbaugruppe (1) nach einem der vorstehenden Ansprüche, **dadurch gekennzeichnet, dass** die beiden Scheinwerfer oder die beiden Rückleuchten eine Befestigungseinrichtung (24) ihres Sekundärgehäuses (21) am Hauptgehäuse (3) aufweisen.

5. Leuchtenbaugruppe (1) nach einem der vorstehenden Ansprüche, **dadurch gekennzeichnet, dass** jedes Sekundärgehäuse (21) an einer Vorderseite offen ist und die Außenlinse (4) die Vorderseite des Sekundärgehäuses verschließt.

6. Leuchtenbaugruppe (1) nach einem der vorstehenden Ansprüche, **dadurch gekennzeichnet, dass** die beiden Scheinwerfer oder die beiden Rückleuchten eine Lichtquelle und ein optisches Ablenkelement umfassen.

## Claims

1. Light assembly (1) intended to be mounted on a motor vehicle, and intended to cover the entire front or rear width of the vehicle, and comprising:
- a main housing (3) having an elongated shape with two ends and comprising a first side with a front opening (32) and a second side, opposite to the first side, with two rear openings (30) arranged facing at least a part of the front opening (32),
- two headlamps or two tail lights, each having a secondary housing (21),
- a outer lens (4) closing the front opening of the first side of the main housing (3) in a watertight manner and covering the two headlamps or tail lights,
- the two headlamps or the two tail lights each being arranged facing one of the two rear openings of the second side of the main housing, and the secondary housing (21) of each of the headlamps or tail lights being fixed in a watertight and reversible manner to each end of the main housing (3),
- the light assembly (1) being **characterized in that** it includes at least one light guide (5) placed in the main housing (3) behind the outer lens (4), the light guide (5) being powered by a light source arranged in at least one of the headlamps (2) or tail lights, and positioned in the secondary housing (21) of said at least one headlamp (2) or said at least one tail light, on a dedicated printed circuit board (15).

2. Light assembly (1) according to claim 1, **characterized in that** the outer lens (4) is fixed irreversibly to the main housing (3).

3. Light assembly (1) according to one of the preceding claims, **characterized in that** each secondary housing (21) comprises a groove (23) in which a sealing gasket (20) is positioned facing the main housing.

4. Light assembly (1) according to one of the preceding claims, **characterized in that** the two headlamps or the two tail lights comprise a means of attachment (24) of their secondary housing (21) to the main housing (3).

5. Light assembly (1) according to one of the preceding claims, **characterized in that** each secondary housing (21) is open on a front face and the outer lens (4) closes the front face of the secondary housing.

6. Light assembly (1) according to one of the preceding claims, **characterized in that** the two headlamps or the two tail lights comprise a light source and an optical deviation element.
